# EUROPÄISCHE PATENTANMELDUNG

(11) **EP 2 100 687 A1**
(43) Veröffentlichungstag der Anmeldung: **16.09.2009**
(21) Anmeldenummer: 08003814.4
(22) Anmeldetag: 29.02.2008
(51) Int. Cl.: B23K 9/12, B23K 26/00, F01D 5/00

(54) **Potentialfreie Drahterwärmung beim Schweissen und Vorrichtung dafür**

(71) Anmelder: SIEMENS AKTIENGESELLSCHAFT, 80333 München (DE)
(72) Erfinder: Arjakine, Nikolai, 10555 Berlin (DE); Wilkenhöner, Rolf, Dr., 14532 Kleinmachnow (DE)

(57) **Zusammenfassung**

Bei dem konventionellen Heißdrahtschweißen kann die Abschmelzleistung und die Temperatur nicht beliebig eingestellt werden.

Durch die potentialfreie Erwärmung des Schweißdrahts (10) kann die Abschmelzleistung und die Temperatur weiterhin gesteigert werden.

## Beschreibung

Die Erfindung betrifft eine Schweißdrahterwärmung beim Schweißen gemäß dem Oberbegriff des Anspruchs 1 und die entsprechende Vorrichtung gemäß dem Oberbegriff des Anspruchs 6.

Bei der Herstellung für Heißkomponenten von Gasturbinen kommen oft nur die Superlegierungen auf Ni-Basis in Betracht. Für die Gasturbinenteile, die am meisten durch das aggressive Heißgasmedium beansprucht werden, wie zum Beispiel Leit- und Laufschaufeln der ersten Stufen, Führungsringsegmente und die Teile der Ringbrennkammer, werden Ni-Basis Superlegierungen mit hohem Anteil an y'-Phase eingesetzt. Der hohe y'-Anteil sichert hohe Festigkeit im Hochtemperaturbereich, da eine Teilchenhärtung mit sehr hohen Volumenanteilen der kohärenten y'-Phase Ni3(Al-Ti,Ta,Nb) ermöglicht wird. Trotz der sehr guten Werkstoffeigenschaften der Ni-Basis Superlegierungen weisen die Heißgaskomponenten nach einer gewissen Anzahl an Betriebsstunden oft einige Schäden auf, die während des Refurbishments repariert werden müssen. Diese Schäden sind durch sehr hohe thermische und mechanische Beanspruchung hervorrufen. Darüber hinaus ist die umgebene Gasatmosphäre sehr korrosiv. Alle Ni-Basis Superlegierungen mit höherem y'-Anteil gelten allgemein als nur bedingt schweißbar, da sie zum einen sehr empfindlich für Heißrissbildung in der Wärmeeinflusszone während des Schweißens sind, und zum anderen das Phänomen des Post-Weld Heat Treatment Crackings kennen, das durch lokale Ausscheidungsvorgänge der y'-Phase verursacht wird.

Der Nachteil bei der konventionellen Heißdrahterwärmung besteht in der geringen Abschmelzleistung und wärmebedingt möglichen Einstellbarkeit der Temperatur des Schweißdrahts und damit der maximal möglichen Temperatur des Schweißdrahts.

Es ist daher Aufgabe der Erfindung ein Verfahren und eine Vorrichtung aufzuzeigen, die das oben genannte Problem überwinden.

Die Aufgabe wird gelöst durch ein Verfahren gemäß Anspruch 1 und einer Vorrichtung gemäß Anspruch 6.

In den Unteransprüchen sind weitere vorteilhafte Maßnahmen aufgelistet, die beliebig in vorteilhafter Art und Weise miteinander kombiniert werden können.

Reparaturen von Gasturbinenschaufeln besitzen großen wirtschaftlichen Nutzen, da die Bauteile sehr teuer sind. Für die Reparatur der betriebsbeanspruchten Heißgaskomponenten wird vorzugsweise als Standardverfahren das manuelle WIG-Schweißen angewendet. Mit dem WIG-Schweißen hergestellte Verbindungs- oder Auftragschweißungen haben eine relativ hohe Qualität. Außerdem ist dieses Verfahren einfach in der Handhabung. Die Anwendung von aussichtreichen Strahlverfahren sowie Laser- und Elektronenstrahlverfahren sind bis jetzt wegen eingeschränkter Flexibilität vor allem auf zweidimensionale Konturen begrenzt. Reparaturschweißungen müssen aber oft auch in Bereichen mit komplizierter Geometrie durchgeführt werden, was den Einsatz von Laser- und Elektronenstrahlverfahren eingeschränkt. Das manuelle WIG-Schweißen wird als flexibles Verfahren häufig bei der Schweißreparatur von betriebsbeanspruchten Heißgaskomponenten einer Gasturbine eingesetzt. Es bietet gegenüber anderen Verfahren den wesentlichen Vorteil einer ausgezeichneten Nahtqualität, auch beim Schweißen in Zwangslagen. Die Nachteile liegen in der geringen Abschmelzleistung und in der damit verbundenen langen Schweißzeit sowie in der Abhängigkeit von der Handfertigkeit des Schweißers. Ein weiterer wesentlicher Nachteil des WIG-Schweißens ist allgemein die Neigung zur Heißrissbildung der Ni- und Co-Basis Legierungen verstärkt durch den hohen Wärmeeintrag beim WIG-Schweißen.

Das Schweißen mit vorgewärmten Zusatzwerkstoffen, insbesondere mit vorgewärmten Drähten, ist Stand der Technik. Motivation ist aber hier ausschließlich eine erhöhte Wirtschaftlichkeit des Verfahrens durch die Erhöhung der Abschmelzgeschwindigkeit des Zusatzwerkstoffs und dadurch auch der Schweißgeschwindigkeit. Motivation für die vorliegende Erfindung ist die Verringerung der Rissbildung der Ni-Superlegierungen durch eine Verringerung des Wärmeintrags in das Substrat. Vorteilhafterweise können bestehende Drahtvorwärmungen auch für die Drahtstärken, die für das WIG-Schweißen von Ni-Superlegierungen meistens verwendet werden (≤2 mm Durchmesser, insbesondere ≤1 mm), eingesetzt werden. Die genauen Parameter einer geeigneten Drahtvorwärmung für das WIG-Schweißen von Ni-Superlegierungen sind individuell festgelegt. Der Einsatz der vorgeschlagenen Schweißtechnologie ermöglicht die Reduzierung des Wärmeeintrages während des WIG-Schweißens von Ni- und Co-Basis Superlegierungen und damit Verringerung der Heißrissanfälligkeit und/oder Produktivitätserhöhung des WIG-Schweißverfahrens.

Die Erfindungsmeldung istaber nicht auf das WIG-Schweißen begrenzt, sondern anwendbar für alle Schweißverfahren, die mit drahtförmigem Zusatzwerkstoff arbeiten (also zum Beispiel Plasmadrahtschweißen, Laserdrahtschweißen).

Es zeigen
- Figur 1: eine Vorrichtung beim konventionellen Heißdrahtschweißen,
- Figur 2: eine Vorrichtung zum potentialfreien Schweißen,
- Figur 3: eine Gasturbine,
- Figur 4: perspektivisch eine Turbinenschaufel,
- Figur 5: perspektivisch eine Brennkammer,

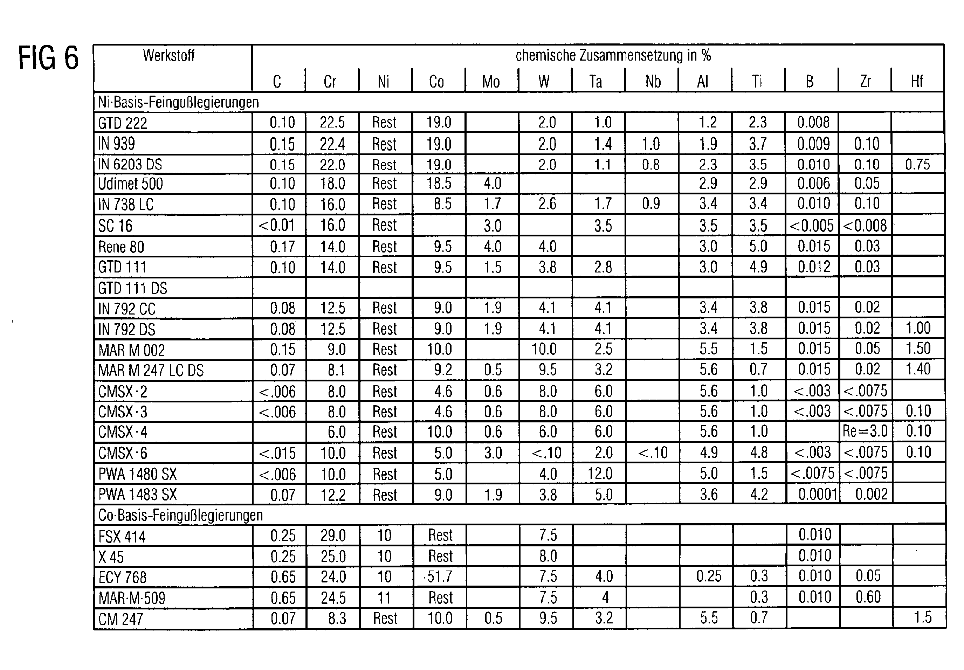

- Figur 6: eine Liste von Superlegierungen.

Die Figuren und die Beschreibung stellen nur Ausführungsbeispiele der Erfindung dar.

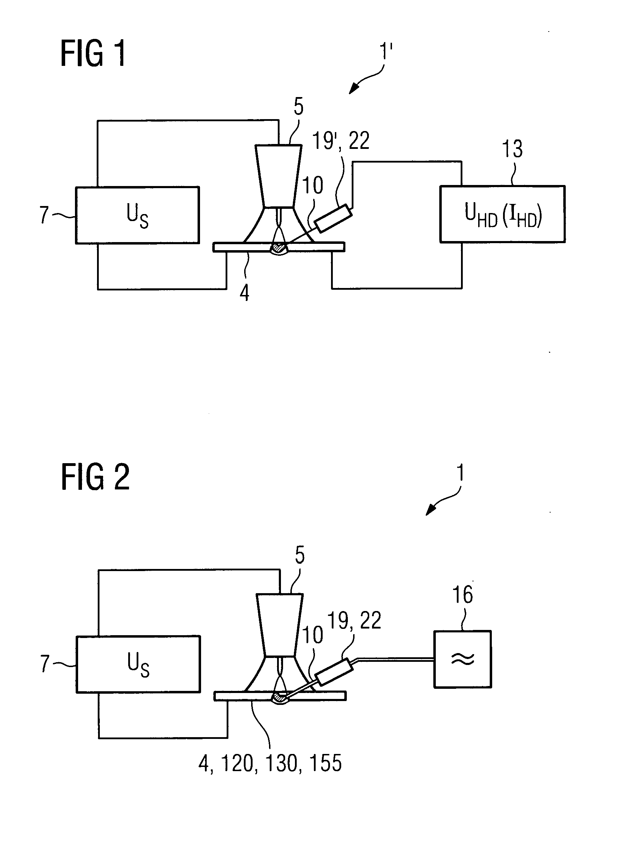

Figur 1 zeigt schematisch eine Vorrichtung 1' für die konventionelle Heißschweißdrahtzugabe beim Schweißen.

Die Vorrichtung 1 weist für ein zu schweißendes Bauteil 4 einen Wärmegenerator 7 für das Bauteil 4 und einen Drahtförderer 22, der den Schweißdraht 10 an die zu schweißende Stelle des Bauteils 4 zuführt, ein Schweißgerät 5 und ein Heizer 19' auf. Ebenfalls vorhanden ist eine Spannungsquelle 13, die den Schweißdraht 10 vorwärmt, wobei diese 13 mit dem Substrat 4 elektrisch verbunden ist.

Eine Erhöhung der Temperatur des Schweißdrahts 10 führt somit zwangsläufig zur unerwünschten Erhöhung der Temperatur des Bauteils 4.
Die Erwärmung des Schweißdrahts 10 und die Erwärmung des Bauteils 4, 120, 130, 155 sind also wärmetechnisch nicht voneinander entkoppelt. Dadurch ist die maximale Temperatur des Schweißdrahts 10 begrenzt.

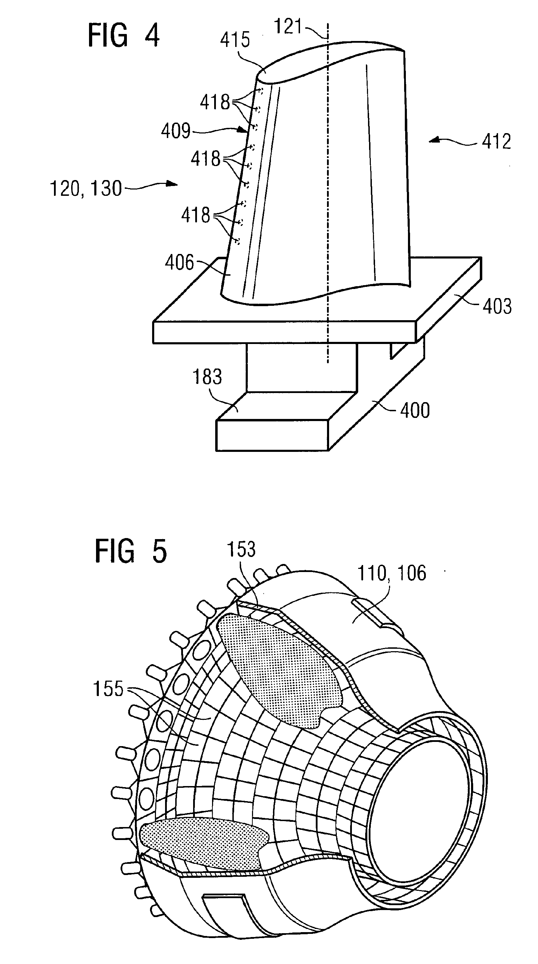

In Figur 2 hingegen ist eine erfindungsgemäße Vorrichtung 1 mit einer potentialfreien Drahterwärmung gezeigt, bei der keine elektrische Verbindung mehr zwischen dem Heizer 19 des Schweißdrahtes 10 und dem Bauteil 4, 120, 130, 155 (Fig. 4, 5) besteht.
Der Heizer 19 ist vorzugsweise eine Wechselstromquelle. Ebenso vorzugsweise kann der Schweißdraht 10 auch induktiv erwärmt werden.

So kann der Schweißdraht 10 auf viel höhere Temperaturen von 400°C bis 1050°C erwärmt werden.
Ebenso lässt sich die Schmelzviskosität des Schweißdrahtes 10 beeinflussen. Der Schweißdraht 10 hat einen Durchmesser bis 2mm.
Außerdem wird der Wärmeeintrag in das Bauteil 4, 120, 130, 155 reduziert und dadurch die Heißrissanfälligkeit verringert.

Das Schweißverfahren läuft ansonsten nach dem Stand der Technik ab, wie z.B. beim Plasmadrahtschweißen, Laserdrahtschweißen oder WIG-Schweißen.
Ebenso kann das Bauteil 4, 120, 130, 155 erwärmt werden durch einen Wärmegenerator 7.

Bauteile 4, 120, 130, 155 sind vorzugsweise aus Rene80, Inconel 738 LC, Inconel 939, PWA1483SX, Siemet DS, IN6203DS, Alloy 247 oder einer Legierung gemäß Figur 5.

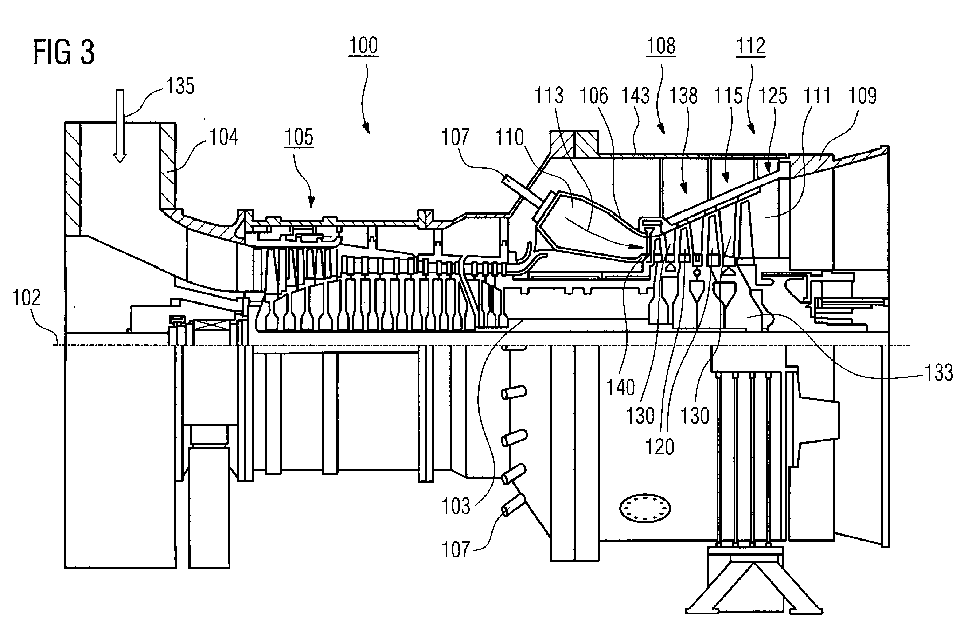

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Schweißen eines Bauteils (4, 120, 130, 155),
bei dem ein erwärmter Schweißdraht (10) dem Bauteil (4, 120, 130, 155) zugeführt wird,
**dadurch gekennzeichnet, dass**
der Schweißdraht (10) potentialfrei erwärmt wird.

2. Verfahren nach Anspruch 1,
**dadurch gekennzeichnet, dass**
keine elektrische Verbindung zwischen Schweißdraht (10) und zu schweißendem Bauteil (4, 120, 130, 155) besteht.

3. Verfahren nach Anspruch 1 oder 2,
**dadurch gekennzeichnet, dass**
der Schweißdraht (10) durch eine Wechselstromquelle (16) erwärmt wird.

4. Verfahren nach Anspruch 1 oder 2,
**dadurch gekennzeichnet, dass**
der Schweißdraht (10) induktiv erwärmt wird.

5. Verfahren nach Anspruch 1, 2, 3 oder 4,
**dadurch gekennzeichnet, dass**
das Verfahren beim Plasmadrahtschweißen, Laserdrahtschweißen oder Wolframinertgasschweißen verwendet wird.

6. Schweißvorrichtung (1),
die ein Schweißgerät (2) und
ein Drahtförderer (19) eines Schweißdrahtes (10) aufweist,
**dadurch gekennzeichnet, dass**
der Schweißdraht (10) potentialfrei erwärmt werden kann.

7. Schweißvorrichtung nach Anspruch 6,
**dadurch gekennzeichnet, dass**
keine elektrische Verbindung zwischen dem Schweißdraht (10) und dem Bauteil (4, 120, 130, 155) besteht.

8. Schweißvorrichtung nach Anspruch 6 oder 7,
**dadurch gekennzeichnet, dass**
ein Heizer (16) zur potentialfreien Erwärmung des Schweißdrahtes (10) vorhanden ist.

9. Schweißvorrichtung (1) nach Anspruch 6, 7 oder 8,
**dadurch gekennzeichnet, dass**
zur potentialfreien Erwärmung des Schweißdrahtes (10) als Heizer eine Wechselstromquelle (16) vorhanden ist.

10. Schweißvorrichtung nach Anspruch 6, 7 oder 8,
**dadurch gekennzeichnet, dass**
zur potentialfreien Erwärmung des Schweißdrahtes (10) als Heizer eine Induktionsquelle (16) vorhanden ist.

11. Schweißvorrichtung nach Anspruch 6, 7, 8, 9 oder 10,
**dadurch gekennzeichnet, dass**
ein Wärmegenerator (7) zur Erwärmung des Bauteils (4, 120, 130, 155) vorhanden ist.
